# EUROPEAN PATENT APPLICATION

(11) **EP 4 502 906 A1**
(43) Date of publication of application: **05.02.2025**
(21) Application number: 22933651.6
(22) Date of filing: 09.12.2022
(51) Int. Cl.: G06Q 30/0238

(54) **PORTABLE TERMINAL DEVICE**

(30) Priority: 25.03.2022 JP 2022049700
(71) Applicant: Toshiba TEC Kabushiki Kaisha, Tokyo 141-8562 (JP)
(72) Inventor: YAMADA, Kento, Izunokuni-shi, Shizuoka 410-2392 (JP); SAKAGUCHI, Takuji, Tokyo 141-8562 (JP)
(74) Representative: Bandpay & Greuter
(86) International application number: PCT/JP2022/045507
(87) International publication number: WO 2023/181522

(57) **Abstract**

A portable terminal device of an embodiment includes: a coupon storage unit that stores coupon information related to a coupon; a display instrument that displays an image of a coupon, which includes a coupon code related to the coupon which has been designated and a use button of the coupon; an operation determination instrument that determines an operation of the use button; a progress determination instrument that determines whether or not a predetermined time has elapsed since it was determined that the use button had been operated; and a processing instrument that prohibits use of the coupon displayed by the display instrument in a case where it is determined that the predetermined time has elapsed.

## Description

### FIELD

An embodiment of the present invention relates to a portable terminal device.

### BACKGROUND

Stores selling products, companies running stores, manufacturers, and the like have issued coupons to customers as part of customer acquisition and promotion strategies. Examples of the coupons include a coupon for giving, in a store, a certain discount on a total amount of purchased products and a coupon for giving a discount on the price of a specific product in a case where the product is purchased.

Furthermore, a mechanism called an electronic receipt has been recently known in which a receipt or an acknowledgement delivered from a store to a customer who has made a purchase at the time of product purchase is converted into electronic data and transmitted to a portable terminal and the like of the customer.

Computerizing receipt information in such a manner enables the customer to browse electronic receipt information by using a portable terminal and the like carried by the customer himself/herself, for example. Then, the presence of a coupon can be confirmed on an electronic receipt by adding coupon information to such electronic receipt information.

Meanwhile, some coupons are made unusable once being used. In order to make a used coupon non-reusable, it is necessary that a clerk operates a button indicating coupon use or the number of times of coupon use is managed by using a large-scale system as described in Patent Literature 1.

### SUMMARY OF THE INVENTION

### Problem to be Solved by the Invention

An object of the present invention is to provide a portable terminal device capable of preventing reuse of a used coupon with a simple configuration.

### Means for Solving Problem

A portable terminal device of an embodiment includes: a coupon storage unit that stores coupon information related to a coupon; a display instrument that displays an image of a coupon, which includes a coupon code related to the coupon which has been designated and a use button of the coupon; an operation determination instrument that determines an operation of the use button; a progress determination instrument that determines whether or not a predetermined time has elapsed since it was determined that the use button had been operated; and a processing instrument that prohibits use of the coupon displayed by the display instrument in a case where it is determined that the predetermined time has elapsed.

### BRIEF DESCRIPTION OF DRAWINGS

FIG. 1 is a configuration diagram illustrating an entire configuration of an electronic receipt system according to an embodiment.
FIG. 2 is a block diagram illustrating a hardware configuration of a POS terminal.
FIG. 3 is a block diagram illustrating a hardware configuration of an electronic receipt server.
FIG. 4 is a block diagram illustrating a hardware configuration of an electronic receipt management server.
FIG. 5 is a memory map illustrating a memory configuration of a member management unit.
FIG. 6 is a block diagram illustrating a hardware configuration of a portable terminal.
FIG. 7 is a flowchart illustrating a flow of control processing of the POS terminal.
FIG. 8 is a flowchart illustrating a flow of control processing of the electronic receipt server.
FIG. 9 is a flowchart illustrating a flow of control processing of the electronic receipt management server.
FIG. 10 is a functional block diagram illustrating a functional configuration of the portable terminal.
FIG. 11 is a flowchart illustrating a flow of control processing of the portable terminal.
FIG. 12 illustrates a display example of the portable terminal.
FIG. 13 illustrates another display example of the portable terminal.
FIG. 14 illustrates still another display example of the portable terminal.

### DETAILED DESCRIPTION

An embodiment of the present invention will be described below with reference to the drawings. In the embodiment, a portable terminal will be described as one example of a portable terminal device. Furthermore, in the embodiment, a coupon is distributed by using a mechanism of an electronic receipt. Note that the invention is not limited by the embodiment to be described below.

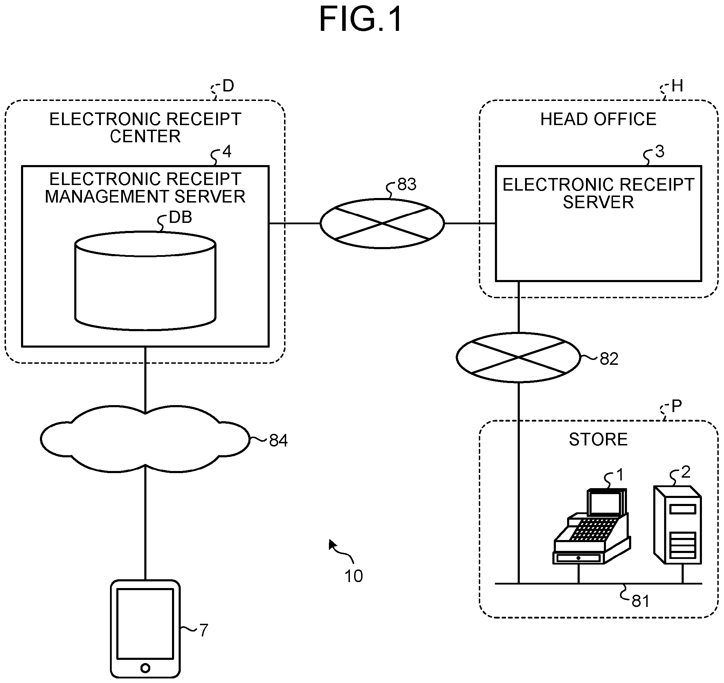

FIG. 1 is a configuration diagram illustrating an entire configuration of an electronic receipt system 10 according to the embodiment. As illustrated in FIG. 1, the electronic receipt system 10 includes a point of sales (POS) terminal 1, a store server 2, an electronic receipt server 3, an electronic receipt management server 4, and a portable terminal 7. The POS terminal 1 and the store server 2 are installed in a store P such as a mall. The electronic receipt server 3 is installed in a head office H. The electronic receipt management server 4 is installed in an electronic receipt center D. The portable terminal 7 is carried by a customer.

The POS terminal 1 is connected to a network 82 connecting the store P with the head office H. Here, the network 82 is a dedicated line such as the Internet and a virtual private network (VPN).

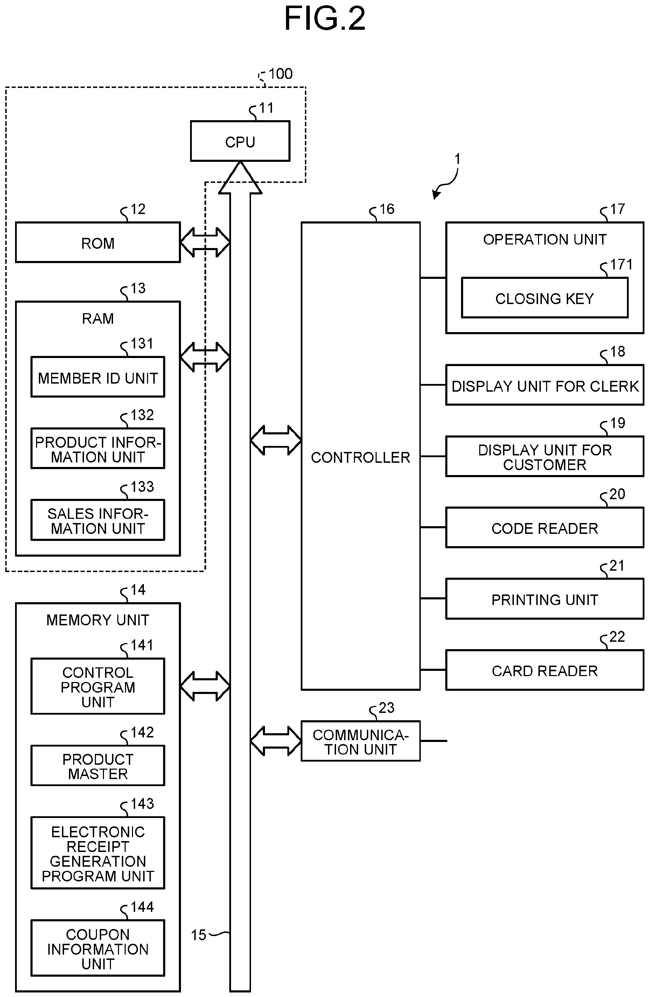

The POS terminal 1 is a product selling data processing device that executes product registration processing and accounting processing related to a product sold in the store P. The product registration processing refers to processing of acquiring product identification information related to a product to be sold and displaying a product name and a price (product information) of the product acquired based on the acquired product identification information on a display unit. Furthermore, the product registration processing includes processing of storing the product information in a product information unit 132 (see FIG. 2). The accounting processing refers to processing of displaying a total amount related to a transaction based on the product information stored in the product information unit 132 along with the product registration processing and performing settlement processing by using a medium such as cash and a credit card. The accounting processing includes processing of calculating and displaying change based on a deposit in a case of cash settlement. Furthermore, the accounting processing includes processing of instructing a change machine to issue change. Furthermore, the accounting processing includes processing of issuing a receipt having printed product information and accounting information (e.g., total amount, deposit amount, and change amount) from a printing unit.

The POS terminal 1 generates receipt information in an unstructured format, which is printing information related to a transaction, based on the product information and the accounting information. Furthermore, the POS terminal 1 issues a paper receipt by printing the generated receipt information with a printing unit 21 to be described later.

Furthermore, the POS terminal 1 generates electronic receipt information computerized by converting a data format of the receipt information into a structured format different from the unstructured format. The electronic receipt information is obtained by converting receipt information supposed to be printed on a receipt sheet into receipt information in a structured format such as a comma-separated values (CSV) method and a J-son method. The electronic receipt information is transmitted to the electronic receipt management server 4 via the electronic receipt server 3, and stored in the electronic receipt management server 4. The electronic receipt information stored in the electronic receipt management server 4 can be downloaded to the portable terminal 7 and browsed. The portable terminal 7 displays the electronic receipt information in substantially the same format as the receipt information to be printed on the receipt sheet.

Furthermore, the POS terminal 1 stores coupon information related to a coupon to be distributed to all customers or customers who become members. The coupon information includes various types of information on a coupon. Examples of the coupon information include information representing the type of the coupon, information on an amount to be discounted by the coupon (information such as degree of discount in yen and degree of discount in percent), information on an expiration date for use of the coupon, information on the store P (company or manufacturer in some cases) that has issued the coupon, and information on the store P in which the coupon can be used.

When generating the receipt information, the POS terminal 1 searches for the presence or absence of a coupon to be distributed to a customer. Then, when there is a coupon to be distributed, the POS terminal 1 associates information related to the coupon with the receipt information. When a coupon is related to a specific product, the product is associated with coupon information of the coupon. When a coupon is not related to a specific product, the coupon is associated with the entire generated receipt information. Then, when the receipt information is converted into electronic receipt information (converted into receipt information in structured format), the associated coupon information is also converted into coupon information in a structured format.

When the electronic receipt information is transmitted to the electronic receipt management server 4 via the electronic receipt server 3, the associated coupon information is added to the electronic receipt information, and transmitted to the electronic receipt management server 4.

Then, the POS terminal 1 transmits the generated electronic receipt information to the electronic receipt server 3 via the network 82 together with a member ID for identifying a customer who is a member. A method of the POS terminal 1 transmitting the electronic receipt information is not particularly limited. A general-purpose protocol such as HTTP and HTTPS may be used. Note that the number of POS terminals 1 provided in the store P is not particularly limited. A plurality of POS terminals 1 may be provided.

The store server 2 manages sales of the entire store P. The store server 2 is connected to the POS terminal 1 via a communication line 81 including a local area network (LAN) provided in the store P. The store server 2 manages sales information of the store P based on selling information at the POS terminal 1. The store server 2 collects pieces of sales information (product registration information and accounting information) from respective POS terminals 1 of the store P as fare adjustment receipt information. The fare adjustment receipt information is obtained by aggregating pieces of sales information on sales made by the store P in a predetermined period (e.g., one day).

The electronic receipt server 3 is provided in the head office H of a company that operates the store P, and functions as a company receipt management server that manages receipt information for each company that operates the store P.

Furthermore, the electronic receipt server 3 receives the member ID and the electronic receipt information transmitted from the POS terminal 1 via the network 82. Furthermore, the electronic receipt server 3 transmits the received member ID and electronic receipt information (and also coupon information in case where coupon information is added) to the electronic receipt management server 4 via a network 83 connecting the head office H with the electronic receipt center D.

Here, the network 83 is, for example, a dedicated line such as the Internet and a VPN. Furthermore, a method of transmitting the electronic receipt information is not particularly limited. A general-purpose protocol such as HTTP and HTTPS may be used.

The electronic receipt management server 4 is provided in the electronic receipt center D. The electronic receipt center D manages, for example, electronic receipt information of each company that manages receipt information with the electronic receipt server 3. The electronic receipt center D is a third-party organization other than the head office H that operates the electronic receipt server 3. Note that the third-party organization and the like may manage the electronic receipt server 3.

The electronic receipt management server 4 functions as a customer receipt management server that collectively manages pieces of electronic receipt information of various companies that operate the store P in a cross-sectional manner. The electronic receipt management server 4 stores and manages the following information in a member master held in a database DB. That is, the electronic receipt management server 4 stores and manages, in the member master, a name of each customer (member) who has performed member registration, a member ID serving as a customer code, a terminal ID (equal to member ID in embodiment) serving as a unique terminal code for identifying the portable terminal 7 that transmits the electronic receipt information, and member data such as transmission destination information (e.g., e-mail address) of the portable terminal 7 serving as a transmission destination of the electronic receipt information. Note that a member management server and the like that store and manage member data may be provided separately from the electronic receipt management server 4.

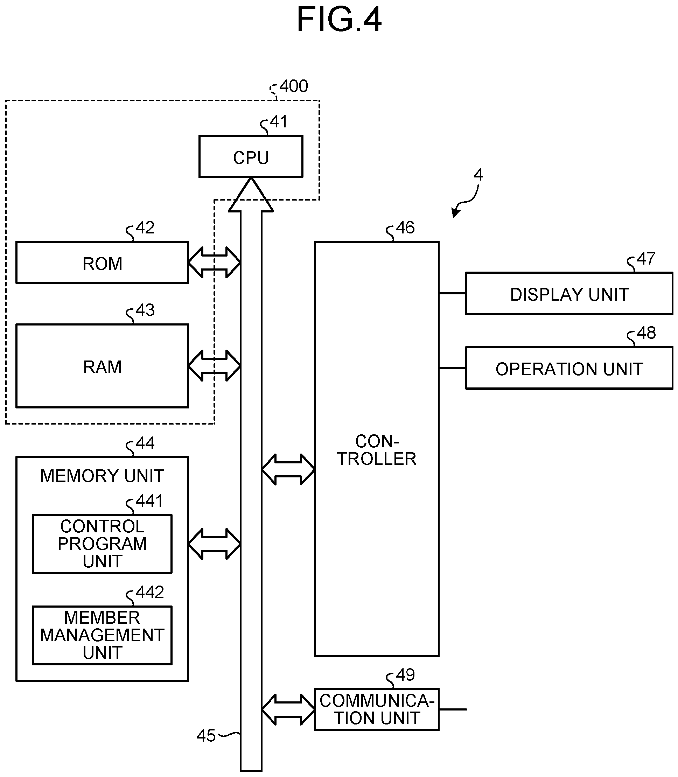

Furthermore, the electronic receipt management server 4 receives the member ID and the electronic receipt information transmitted from the electronic receipt server 3 via the network 83, and stores the electronic receipt information for each member in a member management unit 442 (see FIG. 4) to be described later held in the database DB. When the coupon information is added to the electronic receipt information, the electronic receipt management server 4 stores the electronic receipt information to which the coupon information is added in the member management unit 442 (see FIG. 4) for each member. More specifically, the electronic receipt information includes elements such as store information and a member ID of the store P that transmits the electronic receipt information in addition to product transaction contents (product selling data), and is managed in association with a member ID of the corresponding member.

Furthermore, when storing the electronic receipt information in the member management unit 442, the electronic receipt management server 4 identifies the transmission destination (portable terminal 7) by referring to the transmission destination information associated with the member ID of the electronic receipt information. Then, the electronic receipt management server 4 notifies the transmission destination that there is the electronic receipt information to be transmitted via a network 84 to be described later.

Furthermore, when receiving an electronic receipt inquiry designating a member ID from the portable terminal 7 to which the electronic receipt management server 4 is connected via the network 84, the electronic receipt management server 4 extracts electronic receipt information corresponding to the member ID from the member management unit 442, and transmits the electronic receipt information to the portable terminal 7. Note that, when additional information such as coupon information is added to the electronic receipt information, the electronic receipt management server 4 also transmits the additional information to the portable terminal 7 that has made an inquiry at other timing.

The portable terminal 7 is a portable terminal device such as a smartphone, a mobile phone, a personal digital assistant (PDA), and a tablet computer carried and used by a user (member) of the system. The portable terminal 7 implements an application such as a web browser for browsing various pieces of information provided on the network 84.

The portable terminal 7 performs member registration to the system by accessing the electronic receipt management server 4 via the network 84. Here, the network 84 is the Internet or various public networks.

Meanwhile, in the system, customer member registration for receiving the electronic receipt information in the portable terminal 7 is performed in the following procedure, for example. The customer transmits a blank e-mail from the portable terminal 7 to the electronic receipt management server 4 via the network 84. The electronic receipt management server transmits, to the portable terminal 7, a uniform resource locator (URL) indicating a page for member registration to the received e-mail address. The customer accesses the URL indicating a page for member registration from the portable terminal 7, and displays an input screen for inputting items (e.g., name, address, telephone number, and transmission destination information (e.g., e-mail address information of portable terminal 7)) necessary for the member registration. After the customer ends input of the necessary items, the electronic receipt management server 4 executes member registration to the member master. Thereafter, the electronic receipt management server 4 distributes a member registration completion e-mail including a member ID and a password to the portable terminal 7 (above-described e-mail address). This ends the member registration. A bar code or a two-dimensional code obtained by converting the member ID into a code symbol is displayed on a display unit of the portable terminal 7 authenticated by login after the member registration.

Furthermore, the portable terminal 7 receives, from the electronic receipt management server 4, a notification indicating that an electronic receipt that can be browsed by the portable terminal 7 is stored in the electronic receipt management server 4. The member operates the portable terminal 7 to transmit inquiry information of the electronic receipt information to the electronic receipt management server 4, and then receives electronic receipt information on the member from the electronic receipt management server 4. When coupon information is added to the received electronic receipt information, the portable terminal 7 also simultaneously receives notification information indicating that a coupon is added.

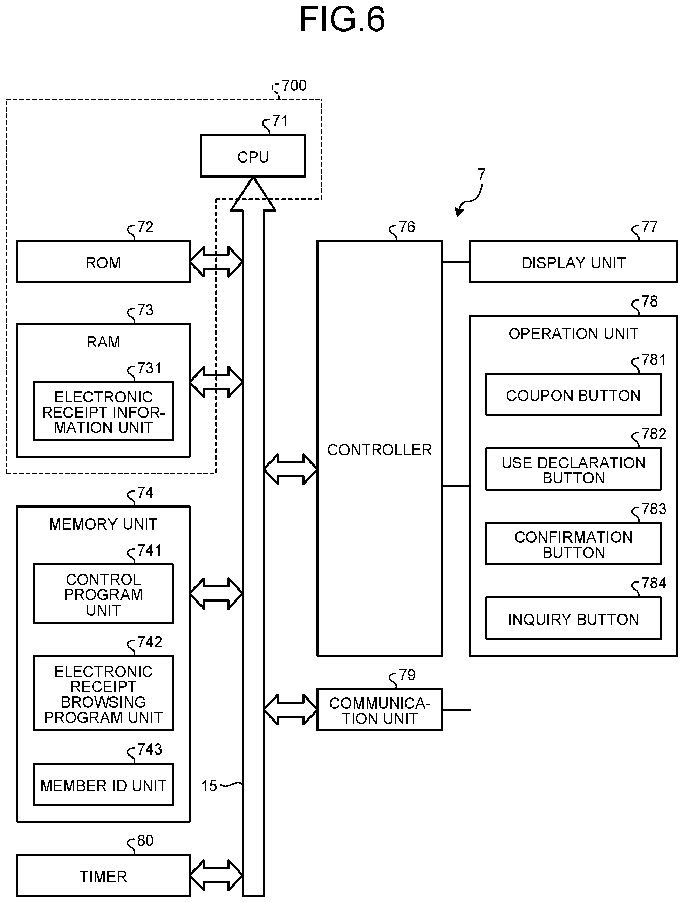

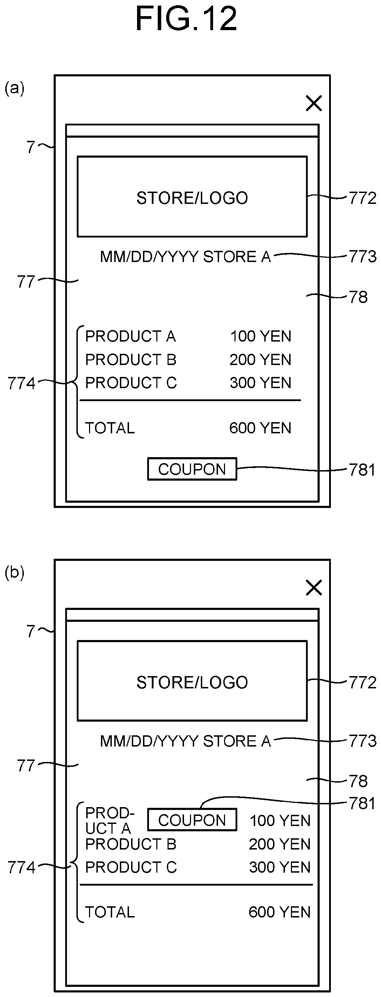

When the received electronic receipt information includes coupon notification information, the portable terminal 7 displays a coupon button 781 (see FIGS. 6 and 12) indicating that a coupon is added. When the coupon is added to an electronic receipt itself, the portable terminal 7 displays the coupon button 781 at a position (see FIG. 12(a)) of a display unit 77, which indicates that the coupon is added to the electronic receipt. Furthermore, when the coupon is added to a specific product, the portable terminal 7 displays the coupon button 781 at a position (e.g., position close to product name, see FIG. 12(b)) of the display unit 77, which corresponds to a display position of the product.

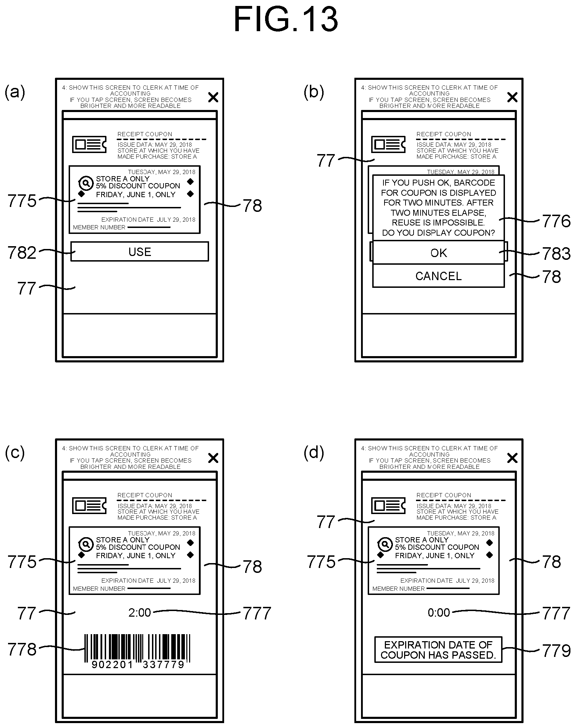

Furthermore, the portable terminal 7 operates the coupon button 781 to download a corresponding coupon from the electronic receipt management server 4 and display the coupon on the display unit 77. A coupon code 778 (see FIG. 13(c)) including information for identifying the coupon is displayed on the displayed coupon. A code reader 20 of the POS terminal 1 images (or optically scans) and reads the coupon code 778 displayed by the portable terminal 7. The POS terminal 1 executes discount processing from a product amount or a transaction subtotal amount based on information on a discount amount included in the read coupon code 778.

Furthermore, when the coupon code 778 is displayed on the display unit 77, the portable terminal 7 activates a timer 80 (see FIG. 6). The timer 80 expires when a predetermined time (e.g., two minutes) elapses. When the timer 80 expires, the portable terminal 7 hides the coupon code 778 displayed on the display unit 77. When the coupon code 778 is hidden, the code reader 20 cannot read the coupon code 778. Then, the POS terminal 1 cannot execute discount processing based on the coupon (i.e., coupon cannot be used thereafter).

In the electronic receipt system 10 having such a configuration, electronic receipt information indicating the contents of one transaction generated by performing product selling data processing and accounting processing in the POS terminal 1 of the store P is transmitted to the electronic receipt management server 4 via the electronic receipt server 3, and published on the Web. Therefore, the portable terminal 7 implementing a web browser can download the electronic receipt information published on the Web to the portable terminal 7 and browse the electronic receipt information on the web browser by designating a uniform resource locator (URL). Note that receipt information may be browsed by installing an application for browsing the receipt information on the portable terminal 7.

A hardware configuration of the POS terminal 1 will now be described. FIG. 2 is a block diagram illustrating the hardware configuration of the POS terminal 1. As illustrated in FIG. 2, the POS terminal 1 includes a central processing unit (CPU) 11, a read only memory (ROM) 12, a random access memory (RAM) 13, and a memory unit 14. The CPU 11 is one example of a microprocessor. The CPU 11 is a control subject of the POS terminal 1. The ROM 12 stores various programs. The RAM 13 develops programs and various pieces of data. The memory unit 14 stores various programs. The CPU 11, the ROM 12, the RAM 13, and the memory unit 14 are connected to each other via a bus 15. The CPU 11, the ROM 12, and the RAM 13 constitute a control unit 100. That is, the control unit 100 executes control processing of the POS terminal 1 to be described later by the CPU 11 operating in accordance with a control program which is stored in the ROM 12 or the memory unit 14 and developed in the RAM 13.

The RAM 13 includes a member ID unit 131, the product information unit 132, and a sales information unit 133. The member ID unit 131 stores a member ID included in a code symbol (bar code or two-dimensional code) read by the code reader 20 and displayed on the display unit 77 of the portable terminal 7. The product information unit 132 stores product information (e.g., product code for identifying product, product name, and price) on a product subjected to product registration processing. The sales information unit 133 stores, as sales information, product information and accounting information on a product for which accounting processing has been performed by the POS terminal 1 within a predetermined period (e.g., one day).

The memory unit 14 includes a non-volatile memory, such as a hard disc drive (HDD) and a flash memory, in which stored information is held even when power is turned off. The memory unit 14 includes a control program unit 141, a product master 142, an electronic receipt generation program unit 143, and a coupon information unit 144. The control program unit 141 stores a control program. The product master 142 stores product information on each product in association with a product code for identifying the product. The electronic receipt generation program unit 143 stores a program for converting receipt information into electronic receipt information. The coupon information unit 144 stores coupon information on a coupon to be distributed to a member.

Furthermore, the control unit 100 is connected to an operation unit 17, a display unit 18 for a clerk, a display unit 19 for a customer, the code reader 20, the printing unit 21, and a card reader 22 via the bus 15 and a controller 16.

The operation unit 17 includes a closing key 171. The closing key 171 is operated by a customer when processing proceeds from the product registration processing to the accounting processing in the POS terminal 1. The display unit 18 for a clerk displays information to an operator (e.g., clerk) who operates the POS terminal 1. The display unit 19 for a customer displays information to a customer and a member. The code reader 20 images and reads a code symbol displayed on the portable terminal 7, a code symbol attached to a product, and the coupon code 778. The printing unit 21 issues a receipt with printed receipt information including product registration information and accounting information related to a product subjected to accounting processing. When the accounting processing is performed by using, for example, a credit card and a debit card, the card reader 22 reads card information from the card.

In response to an instruction from the control unit 100, the controller 16 controls the operation unit 17, the display unit 18 for a clerk, the display unit 19 for a customer, the code reader 20, the printing unit 21, and the card reader 22. Note, however, that, for convenience of description, control performed by the controller 16 will be described as being performed by the control unit 100.

Furthermore, the control unit 100 is connected to a communication unit 23 via the bus 15. The communication unit 23 is electrically connected to another POS terminal 1 and the store server 2 via the communication line 81.

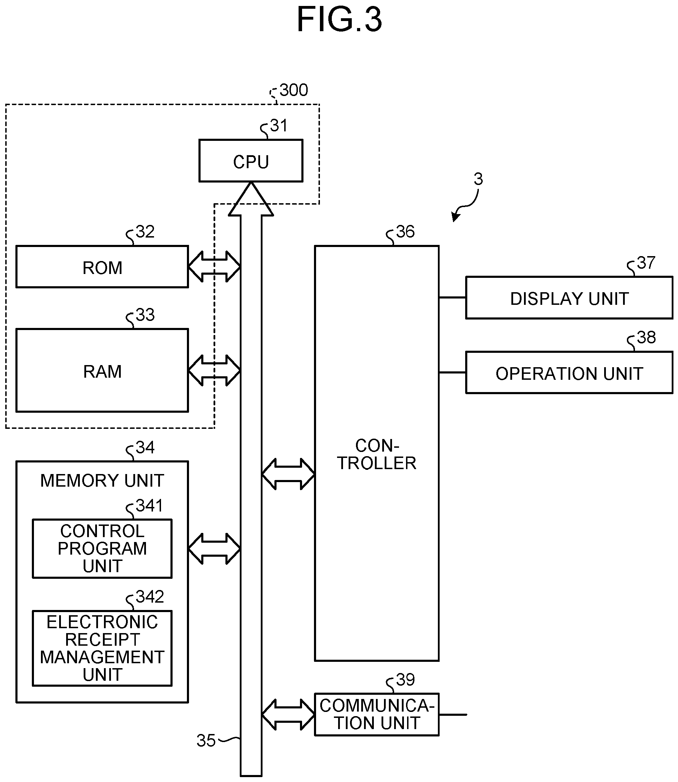

Next, a hardware configuration of the electronic receipt server 3 that functions as a receipt management server for a company will be described. FIG. 3 is a block diagram illustrating the hardware configuration of the electronic receipt server 3. As illustrated in FIG. 3, the electronic receipt server 3 includes a CPU 31, a ROM 32, a RAM 33, and a memory unit 34. The CPU 31 is one example of a microprocessor. The CPU 31 is a control subject of the electronic receipt server 3. The ROM 32 stores various programs. The RAM 33 develops programs and various pieces of data. The memory unit 34 stores various programs. The CPU 31, the ROM 32, the RAM 33, and the memory unit 34 are connected to each other via a bus 35. The CPU 31, the ROM 32, and the RAM 33 constitute a control unit 300. That is, the control unit 300 executes control processing of the electronic receipt server 3 to be described later by the CPU 31 operating in accordance with a control program, which is stored in the ROM 32 or the memory unit 34 and developed in the RAM 33.

The memory unit 34 includes a non-volatile memory, such as an HDD and a flash memory, in which stored information is held even when power is turned off. The memory unit 34 includes a control program unit 341 and an electronic receipt management unit 342. The control program unit 341 stores a control program. The electronic receipt management unit 342 stores the electronic receipt information received from the POS terminal 1. The electronic receipt information stored in the electronic receipt management unit 342 includes a company code (identification code of company that operates store), a business type/business category code, a store code, a member ID of a shopper, a POS number of the POS terminal 1, a receipt number, product information, and accounting information. Furthermore, when coupon information is added to the electronic receipt information, the coupon information is stored.

Furthermore, the control unit 300 is connected to a display unit 37 and an operation unit 38 via the bus 35 and a controller 36. The display unit 37 displays information to the operator of the electronic receipt server 3. The operation unit 38 is a keyboard operated by the operator.

The controller 36 controls the display unit 37 and the operation unit 38 in response to an instruction from the control unit 300. Note, however, that, for convenience of description, control performed by the controller 36 will be described as being performed by the control unit 300.

Furthermore, the control unit 300 is connected to a communication unit 39 via the bus 35. The communication unit 39 is connected to the POS terminal 1 and the store server 2 via the network 82. Furthermore, the communication unit 39 is connected to the electronic receipt management server 4 via the network 83.

Next, a hardware configuration of the electronic receipt management server 4 that functions as the customer receipt management server will be described. FIG. 4 is a block diagram illustrating a hardware configuration of the electronic receipt management server 4. As illustrated in FIG. 4, the electronic receipt management server 4 includes a CPU 41, a ROM 42, a RAM 43, and a memory unit 44. The CPU 41 is one example of a microprocessor. The CPU 41 is a control subject of the electronic receipt management server 4. The ROM 42 stores various programs. The RAM 43 develops programs and various pieces of data. The memory unit 44 stores various programs. The CPU 41, the ROM 42, the RAM 43, and the memory unit 44 are connected to each other via a bus 45. The CPU 41, the ROM 42, and the RAM 43 constitute a control unit 400. That is, the control unit 400 executes control processing of the electronic receipt management server 4 to be described later by the CPU 41 operating in accordance with a control program which is stored in the ROM 42 or the memory unit 44 and developed in the RAM 43.

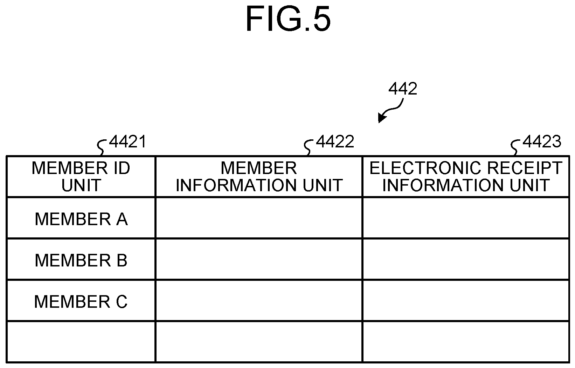

The memory unit 44 includes a non-volatile memory, such as an HDD and a flash memory, in which stored information is held even when power is turned off. The memory unit 44 includes a control program unit 441 and the member management unit 442. The control program unit 441 stores a control program. The member management unit 442 stores various pieces of information on a customer who has become a member. The member management unit 442 will be described later with reference to FIG. 5.

Furthermore, the control unit 400 is connected to a display unit 47 and an operation unit 48 via the bus 45 and a controller 46. The display unit 47 displays information to the operator of the electronic receipt management server 4. The operation unit 48 is a keyboard operated by the operator.

The controller 46 controls the display unit 47 and the operation unit 48 in response to an instruction from the control unit 400. Note, however, that, for convenience of description, control performed by the controller 46 will be described as being performed by the control unit 400.

Furthermore, the control unit 400 is connected to a communication unit 49 via the bus 45. The communication unit 49 is connected to the electronic receipt server 3 via the network 83. Furthermore, the communication unit 49 is connected to the portable terminal 7 via the network 84.

Next, the member management unit 442 will be described. FIG. 5 is a memory map illustrating a memory configuration of the member management unit 442. As illustrated in FIG. 5, the member management unit 442 includes a member ID unit 4421, a member information unit 4422, and an electronic receipt information unit 4423. The member ID unit 4421 stores a member ID for identifying a member. The member ID is also terminal information for identifying the portable terminal 7 carried by the member. The member information unit 4422 stores various pieces of information (e.g., name, address, telephone number, and e-mail address of portable terminal 7) related to the member for each member in association with a member ID stored in the member ID unit 4421. The electronic receipt information unit 4423 stores the electronic receipt information received from the electronic receipt server 3 for each member in association with a member ID stored in the member ID unit 4421. The electronic receipt information stored in the electronic receipt information unit 4423 includes a company code (identification code of company that operates store), a business type/business category code, a store code, a member ID of a shopper, a POS number of the POS terminal 1, a receipt number, product information, and accounting information. Furthermore, when coupon information is added to the electronic receipt information, the coupon information is stored.

Next, a hardware configuration of the portable terminal 7 will be described. FIG. 6 is a block diagram illustrating a hardware configuration of the portable terminal 7. As illustrated in FIG. 6, the portable terminal 7 includes a CPU 71, a ROM 72, a RAM 73, and a memory unit 74. The CPU 71 is one example of a microprocessor. The CPU 71 is a control subject of the portable terminal 7. The ROM 72 stores various programs. The RAM 73 develops programs and various pieces of data. The memory unit 74 stores various programs. The CPU 71, the ROM 72, the RAM 73, and the memory unit 74 are connected to each other via a bus 75. The CPU 71, the ROM 72, and the RAM 73 constitute a control unit 700. That is, the control unit 700 executes control processing of the portable terminal 7 to be described later by the CPU 71 operating in accordance with a control program which is stored in the ROM 72 or the memory unit 74 and developed in the RAM 73.

The RAM 73 includes an electronic receipt information unit 731 (coupon storage unit). The electronic receipt information unit 731 stores the electronic receipt information downloaded from the electronic receipt management server 4. Furthermore, the electronic receipt information unit 731 stores coupon information downloaded from the electronic receipt management server 4.

The memory unit 74 includes a non-volatile memory, such as an HDD and a flash memory, in which stored information is held even when power is turned off. The memory unit 74 includes a control program unit 741, an electronic receipt browsing program unit 742, and a member ID unit 743. The control program unit 741 stores a control program. The electronic receipt browsing program unit 742 stores a browsing program for downloading and browsing electronic receipt information. The member ID unit 743 stores a member ID for identifying a member who holds the portable terminal 7. The member ID is also a terminal ID for identifying the portable terminal 7 in which the member ID is stored.

Furthermore, the control unit 700 is connected to the display unit 77 and an operation unit 78 via the bus 75 and a controller 76. The display unit 77 displays information to a member. The operation unit 78 is a keyboard operated by the operator of the portable terminal 7. The operation unit 78 includes the coupon button 781, a use declaration button 782, a confirmation button 783 (use button), and an inquiry button 784. When a coupon is added to the electronic receipt information, the coupon button 781 is displayed on the display unit 77 together with the electronic receipt. The coupon button 781 is used for displaying coupon information on the added coupon on the display unit 77. The use declaration button 782 is used for declaring use of the coupon. When using the displayed coupon, the member operates the use declaration button 782. The confirmation button 783 is used for confirming the use of the coupon. In order to confirm the use of the displayed coupon, the member operates the confirmation button 783. The inquiry button 784 is used for making an inquiry for displaying an electronic receipt on the portable terminal 7.

The controller 76 controls the display unit 77 and the operation unit 78 in response to an instruction from the control unit 700. Note, however, that, for convenience of description, control performed by the controller 76 will be described as being performed by the control unit 700.

Furthermore, the control unit 700 is connected to a communication unit 79 via the bus 75. The communication unit 79 is connected to the electronic receipt management server 4 via the network 84. Furthermore, the control unit 700 is connected to the timer 80 via the bus 75. The timer 80 measures time.

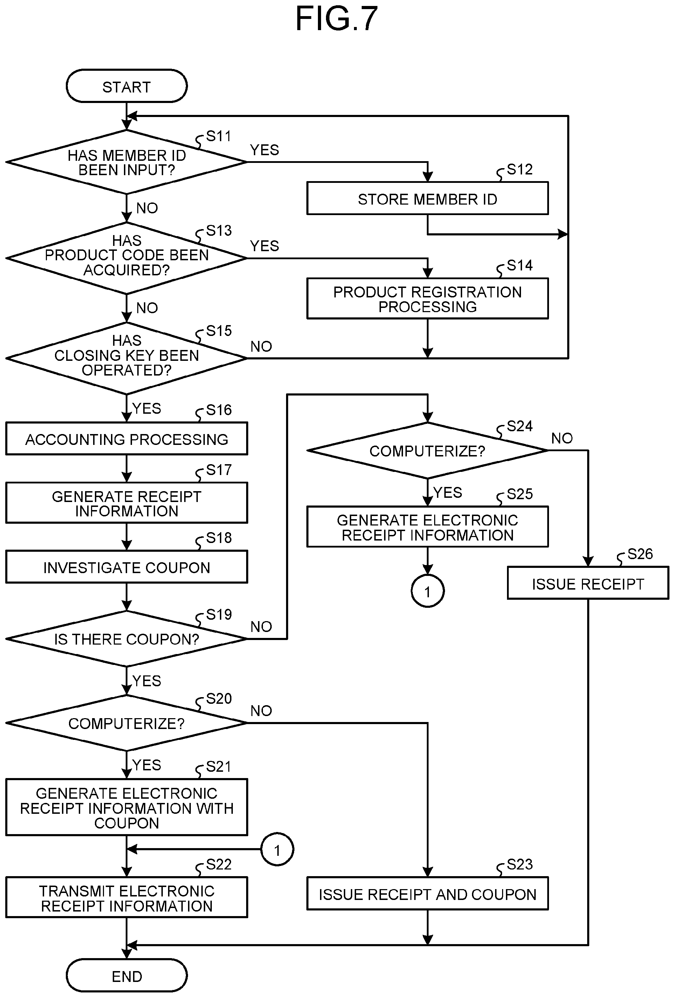

Control of the POS terminal 1 will now be described. FIG. 7 is a flowchart illustrating a flow of control processing of the POS terminal 1. As illustrated in FIG. 7, the control unit 100 of the POS terminal 1 determines whether or not a member ID has been input by the code reader 20 reading a code symbol displayed on the display unit 77 of the portable terminal 7 (S11). When determining that the member ID has been input (Yes in S11), the control unit 100 stores the member ID in the member ID unit 131 (S12). Then, the control unit 100 returns to S11.

Furthermore, when determining that the member ID has not been input (No in S11), the control unit 100 determines whether or not a product code for identifying a product has been acquired by the code reader 20 reading a code symbol such as a bar code attached to the product (S13). When determining that the product code has been acquired (Yes in S13), the control unit 100 searches the product master 142 based on the acquired product code, reads product information (e.g., product name and product price) corresponding to the product code, and executes product registration processing (S14). Then, the control unit 100 returns to S11. Each time a code symbol attached to a product is read, the control unit 100 repeats the processing of S13 and the processing of S14.

Furthermore, when determining that the product code has not been acquired (No in S13), the control unit 100 determines whether or not the closing key 171 has been operated (S15). When determining that the closing key 171 has been operated (Yes in S15), the control unit 100 executes accounting processing based on information, stored in the product information unit 132, on a product subjected to product registration processing (S16).

Next, the control unit 100 generates receipt information to be printed and output as a receipt based on product information and accounting information on a product subjected to accounting processing (S17). Next, the control unit 100 investigates the presence or absence of a coupon to be distributed in relation to the transaction (S18). Specifically, the control unit 100 searches the coupon information unit 144. The control unit 100 searches the coupon information unit 144 based on a member ID, product information, and accounting information stored in the member ID unit 131, and investigates the presence or absence of a coupon to be distributed to the member. For example, the control unit 100 investigates the rank of the member, and investigates the presence or absence of a coupon in accordance with the rank of the customer. Furthermore, for example, the control unit 100 investigates the presence or absence of a coupon to be distributed to the member during a campaign period. Furthermore, for example, the control unit 100 investigates the presence or absence of a coupon to be distributed in relation to a product purchased by the member based on the product information. Furthermore, for example, the control unit 100 investigates the presence or absence of a coupon to be distributed in a case where a total amount of purchased products is equal to or more than a predetermined amount based on the accounting information. Note that the coupon information unit 144 stores coupon information on various coupons such as a coupon to be distributed to a specific member and a coupon distributed to all customers who have purchased a product. The control unit 100 investigates coupon information related to a coupon to be distributed to the member as a result of the investigation in the processing of S18.

Next, the control unit 100 determines whether or not there is a coupon to be distributed to a member or a customer as a result of the investigation (S19). When determining that there is a coupon to be distributed (Yes in S19), the control unit 100 determines whether to computerize the receipt information generated in S17 (S20). For example, when the member ID unit 131 stores a member ID, the control unit 100 determines to computerize the receipt information. Furthermore, for example, when the POS terminal 1 makes a response indicating that receipt information needs to be computerized to an inquiry to the electronic receipt management server 4, the control unit 100 determines to computerize the receipt information. When determining that the receipt information is to be computerized (Yes in S20), the control unit 100 generates electronic receipt information based on a program stored in the electronic receipt generation program unit 143 (S21). The electronic receipt information is obtained by adding coupon information on a coupon, which has been investigated in S18 and which is to be distributed, in the receipt information generated in the processing in S17 (S21). Then, the control unit 100 transmits the generated electronic receipt information to the electronic receipt server 3 (S22). Then, the control unit 100 ends the processing.

Furthermore, when determining not to computerize the receipt information generated in S17 (No in S20), the control unit 100 prints a receipt on which the receipt information generated in S17 is printed and a coupon determined to be added in S18 by using the printing unit 21, and issues the receipt and the coupon (S23). Then, the control unit 100 ends the processing.

Furthermore, when determining, in S19, that there is not a coupon to be distributed (No in S19), the control unit 100 determines (as in S20) whether to computerize the receipt information generated in S17 (S24). When determining that the receipt information is to be computerized (Yes in S24), the control unit 100 generates electronic receipt information based on a program stored in the electronic receipt generation program unit 143. The electronic receipt information is obtained by computerizing the receipt information generated in the processing of S17 (S25). Then, the control unit 100 transmits the generated electronic receipt information to the electronic receipt server 3 (S22). Then, the control unit 100 ends the processing.

Furthermore, when determining not to computerize the receipt information generated in S17 (No in S24), the control unit 100 issues a receipt on which the receipt information generated in S17 is printed by using the printing unit 21 (S26). Then, the control unit 100 ends the processing. Note that, when determining, in S15, that the closing key 171 has not been operated (No in S15), the control unit 100 returns to S11.

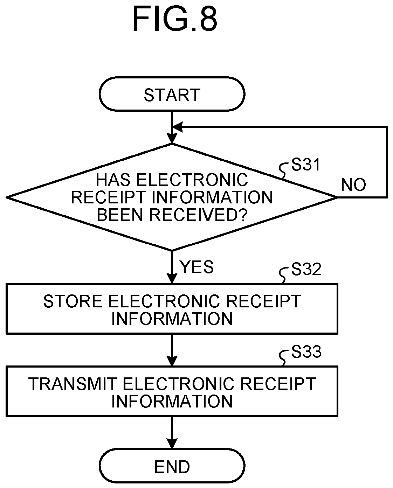

Control of the electronic receipt server 3 will now be described. FIG. 8 is a flowchart illustrating a flow of control processing of the electronic receipt server 3.

The control unit 300 of the electronic receipt server 3 determines whether or not the electronic receipt information transmitted from the POS terminal 1 has been received (S31). The control unit 300 waits until the reception (No in S31). When determining that the reception has been performed (Yes in S31), the control unit 300 stores the electronic receipt information in the electronic receipt management unit 342 for each company (S32). Then, the control unit 300 transmits the stored electronic receipt information to the electronic receipt management server 4 (S33). Then, the control unit 300 ends the processing.

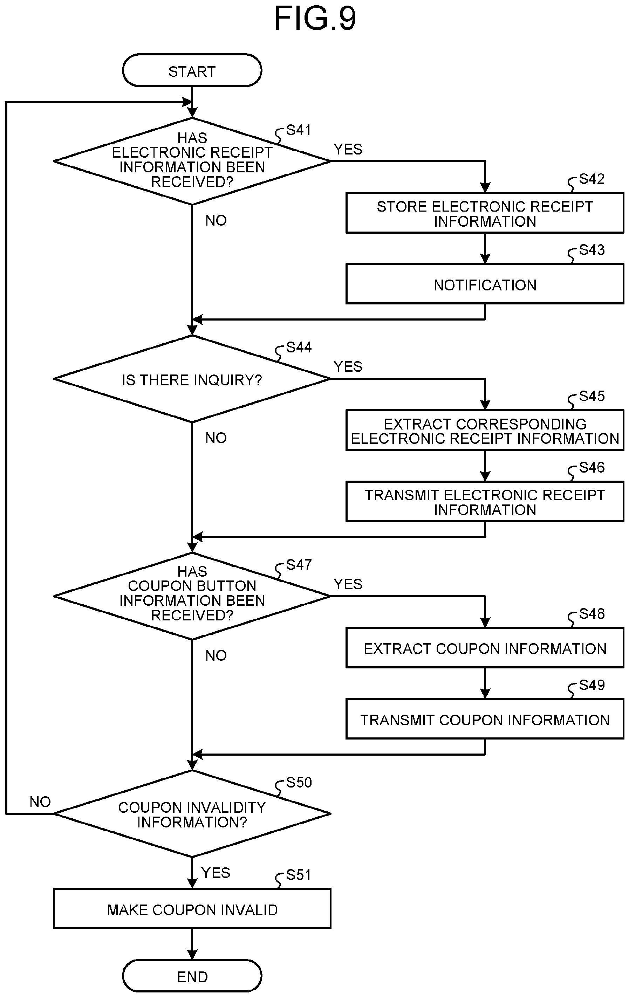

Control of the electronic receipt management server 4 will now be described. FIG. 9 is a flowchart illustrating a flow of control processing of the electronic receipt management server 4. As illustrated in FIG. 9, the control unit 400 of the electronic receipt management server 4 determines whether or not the electronic receipt information has been received from the electronic receipt server 3 (S41). When determining that the electronic receipt information has been received (Yes in S41), the control unit 400 stores the received electronic receipt information in the electronic receipt information unit 4423 corresponding to a simultaneously received member ID (S42). That is, the control unit 400 stores the received electronic receipt information as electronic receipt information of a member identified by the received member ID. When coupon information is added to the received electronic receipt information, the control unit 400 also stores the coupon information in the electronic receipt information unit 4423 in the processing of S42.

Next, the control unit 400 calls an e-mail address of the portable terminal 7 from the corresponding member information unit 4422, and notifies the portable terminal 7 identified by the member ID of information indicating that there is an electronic receipt to be distributed (S43).

Furthermore, when determining that the electronic receipt information has not been received (No in S41) and after the processing of S43 is executed, the control unit 400 determines whether or not inquiry information related to browsing of the electronic receipt has been received from the portable terminal 7 (S44). When determining that the inquiry information has been received (Yes in S44), the control unit 400 searches the member management unit 442 based on the simultaneously received member ID, and extracts the electronic receipt from the electronic receipt information unit 4423 corresponding to the member ID unit 4421 in which the corresponding member ID is stored (S45). Then, the control unit 400 transmits (distributes) the extracted electronic receipt information to the portable terminal 7 identified by the member ID (S46). When coupon information is added to the extracted electronic receipt information in the processing of S46, the control unit 400 transmits information indicating that the coupon is added together with the electronic receipt information. Specifically, when the coupon information is added to the entire electronic receipt, the control unit 400 transmits the information indicating that the coupon is added in association with the electronic receipt information. When the coupon information is added to a specific product included in the electronic receipt information, the control unit 400 transmits the information indicating that the coupon is added in association with information on the specific product.

Furthermore, when the inquiry information related to browsing of the electronic receipt has not been received (No S44) and after the processing of S46 is executed, the control unit 400 determines whether or not coupon button information indicating that the coupon button 781 has been operated has been received from the portable terminal 7 (S47). When determining that the coupon button information has been received (Yes in S47), the control unit 400 searches the member management unit 442 based on the simultaneously received member ID, and extracts the coupon information from the electronic receipt information unit 4423 corresponding to the member ID unit 4421 in which the corresponding member ID is stored (S48). Then, the control unit 400 transmits the extracted electronic receipt information to the portable terminal 7 identified by the member ID (S49).

Furthermore, when the coupon button information has not been received (No in S47) and after the processing of S49 is executed, the control unit 400 determines whether or not a member ID and coupon invalidity information (including information for identifying coupon) have been received from the portable terminal 7 (S50). When determining that the coupon invalidity information has been received (Yes in S50), the control unit 400 stores information indicating that the coupon cannot be used in the coupon information of a corresponding member stored in the electronic receipt information unit 4423 based on the received member ID. The coupon in which the information indicating that the coupon cannot be used is stored is not extracted in the processing of S48. Then, the control unit 400 ends the processing. Furthermore, when determining that the coupon invalidity information has not been received (No in S50), the control unit 400 returns to S41.

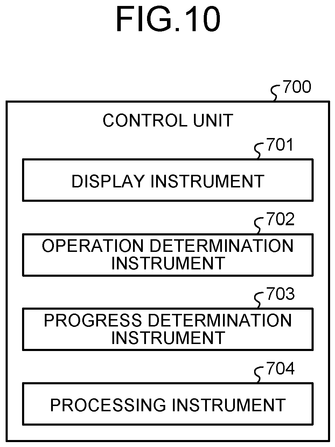

A functional configuration of the portable terminal 7 will now be described. FIG. 10 is a functional block diagram illustrating a functional configuration of the portable terminal 7. The control unit 700 functions as a display instrument 701, an operation determination instrument 702, a progress determination instrument 703, and a processing instrument 704 in accordance with a control program stored in the ROM 72 and the control program unit 741 of the memory unit 74 and a program stored in the electronic receipt browsing program unit 742.

The display instrument 701 displays an image of a coupon, which includes the coupon code 778 related to a designated coupon and a use button of the coupon. Specifically, the display instrument 701 displays the image of a coupon, which includes the coupon code 778 related to a designated coupon and the use button (confirmation button 783) of the coupon among pieces of coupon information stored in the electronic receipt information unit 731 serving as the coupon storage unit.

The operation determination instrument 702 determines an operation of the use button (confirmation button 783).

The progress determination instrument 703 determines whether or not a predetermined time has elapsed since it was determined that the use button (confirmation button 783) had been operated.

When it is determined that a predetermined time has elapsed, the processing instrument 704 prohibits use of the coupon displayed by the display instrument 701. For example, the processing instrument 704 prohibits the use of the coupon displayed by the display instrument 701 by hiding the displayed coupon code 778 in a case where it is determined that the predetermined time has elapsed. Furthermore, for example, the processing instrument 704 prohibits the use of the coupon displayed by the display instrument 701 by making the coupon code 778 unreadable by displaying another image on the displayed coupon code 778 in a case where it is determined that the predetermined time has elapsed. Furthermore, for example, the processing instrument 704 prohibits the use of the coupon displayed by the display instrument 701 by transmitting prohibition information (coupon invalidity information) for prohibiting the use of the displayed coupon to the electronic receipt management server 4 that manages the coupon in a case where it is determined that the predetermined time has elapsed.

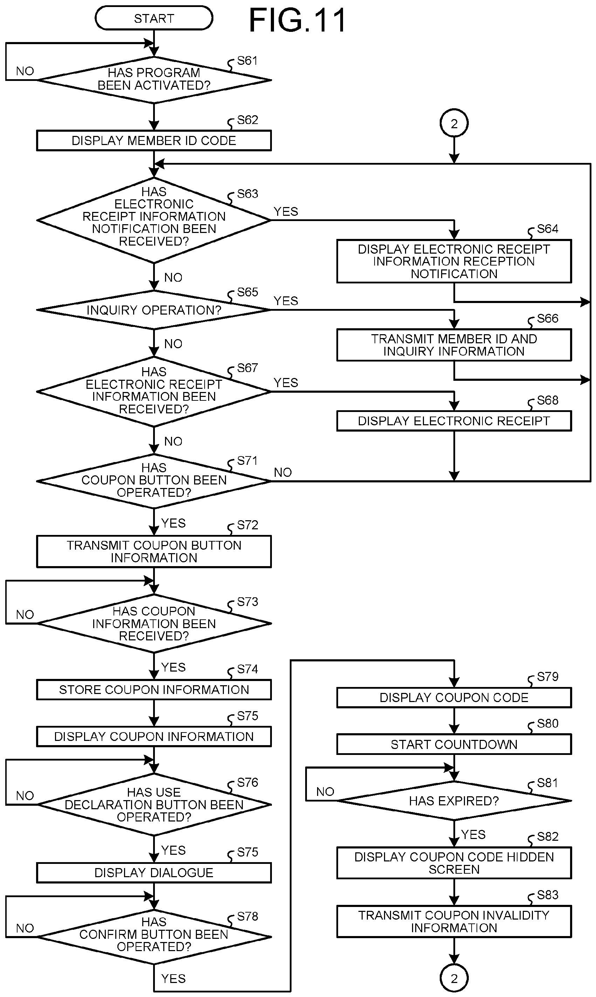

Control of the portable terminal 7 will now be described. FIG. 11 is a flowchart illustrating a flow of control processing of the portable terminal 7. As illustrated in FIG. 11, the control unit 700 of the portable terminal 7 determines whether or not a browsing program stored in the electronic receipt browsing program unit 742 has been activated in the portable terminal 7 (S61). The control unit 700 waits until the activation (No in S61). When determining that the browsing program has been activated (Yes in S61), the control unit 700 displays, on the display unit 77, a code symbol (e.g., bar code) including information on a member ID stored in the member ID unit 743 (S62). The POS terminal 1 executes the determination of S11 and the processing of S12 by reading the displayed code symbol with the code reader 20 of the POS terminal 1.

Next, the control unit 700 determines whether or not an electronic receipt information notification has been received from the electronic receipt management server 4 (S63). The electronic receipt information notification indicates that the electronic receipt management server 4 stores the electronic receipt information to be distributed to the portable terminal 7. When determining that the electronic receipt information notification has been received (Yes in S63), the control unit 700 displays the received electronic receipt information notification on the display unit 77 (S64). Furthermore, in the processing of S64, the control unit 700 displays the inquiry button 784 for inquiring an electronic receipt. When the electronic receipt information notification is displayed on the display unit 77, a member carrying the portable terminal 7 recognizes that the electronic receipt information can be browsed on the portable terminal 7. Then, when requesting browsing of an electronic receipt, the member operates the inquiry button 784. Then, the control unit 700 returns to S63.

Furthermore, when determining that the electronic receipt information notification has not been received (No in S63), the control unit 700 determines whether or not the inquiry button 784 has been operated (S65). When determining that the inquiry button 784 has been operated (Yes in S65), the control unit 700 transmits the member ID stored in the member ID unit 743 and inquiry information of the electronic receipt to the electronic receipt management server 4 (S66). Then, the control unit 700 returns to S63.

Furthermore, when determining that the inquiry button 784 has not been operated (No in S65), the control unit 700 determines whether or not the electronic receipt information in response to the inquiry of the electronic receipt information has been received from the electronic receipt management server 4 (S67). When determining that the electronic receipt information has been received (Yes in S67), the control unit 700 stores the received electronic receipt information in the electronic receipt information unit 731, and displays an electronic receipt based on the stored electronic receipt information on the display unit 77 (S68). Then, the control unit 700 returns to S63. FIGS. 12(a) and 12(b) illustrate one example of the electronic receipt displayed on the display unit 77 by the control unit 700.

As illustrated in FIG. 12(a), the control unit 700 displays, as an electronic receipt, store name/logo 772, date and time of accounting processing and store name 773, and product information 774 on a product subjected to product registration processing (i.e., purchased product). Furthermore, the control unit 700 displays the coupon button 781 in a lower portion of the display unit 77. The coupon button 781 indicates that a coupon is added to the electronic receipt. The coupon button 781 is displayed not at a position corresponding to the product information but in the lower portion of the electronic receipt. For example, the added coupon is used for giving a discount on a total amount (e.g., 5% discount from total amount and 100-yen discount from total amount).

Furthermore, as illustrated in FIG. 12(b), the control unit 700 displays, as an electronic receipt, store the name/logo 772, the date and time of accounting processing and store name 773, and the product information 774 on a product subjected to product registration processing (i.e., purchased product). Furthermore, the control unit 700 displays the coupon button 781 indicating that a coupon is added to the electronic receipt at a position corresponding to the display position of a specific product (position adjacent side by side to display position of product A in FIG. 12(b)). The coupon button 781 is displayed at a position adjacent side by side to the display position of the product information. Thus, the added coupon is used for giving a discount on a specific product (product A in FIG. 12(b)) (e.g., 5% discount from price of product A and 100-yen discount from price of product A).

The description returns to FIG. 11. Furthermore, when determining that the electronic receipt information has not been received (No in S67), the control unit 700 determines whether or not the coupon button 781 has been operated (S71). When determining that the coupon button 781 has been operated (Yes in S71), the control unit 700 transmits coupon button information indicating that the coupon button 781 has been operated to the electronic receipt management server 4 (S72).

Next, in response to the transmission of the coupon button information, the control unit 700 determines whether or not the coupon information transmitted from the electronic receipt management server 4 has been received (S73). The control unit 700 waits until the reception (No in S73). When determining that the coupon information has been received (Yes in S73), the control unit 700 stores the received coupon information in the electronic receipt information unit 731 (S74). Then, the display instrument 701 displays coupon information 775 stored in the electronic receipt information unit 731 on the display unit 77 (S75).

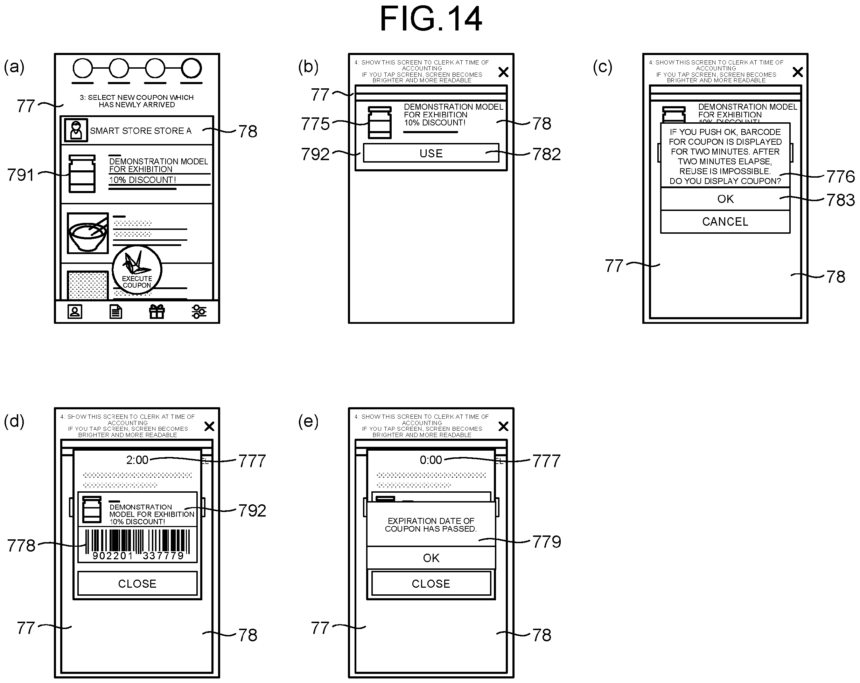

FIGS. 13(a), 14(a), and 14(b) illustrate one example of the coupon displayed in the processing of S74. FIG. 13(a) is one example of a coupon for giving a discount on a total purchase amount in the store P. The display instrument 701 displays, on the display unit 77, the coupon information 775 such as a store name of a discount target, discount information (5% discount coupon), and an expiration date. Furthermore, the display instrument 701 displays an image of the use declaration button 782 for declaring use of the coupon at a position below the coupon information 775. The position of the image in the operation unit 78 functions as the use declaration button 782.

FIG. 14(a) illustrates one example of a coupon related to a coupon for a specific product. The display instrument 701 displays a coupon related to a product of a discount target on the display unit 77. In FIG. 14(a), a plurality of types of coupons are displayed so as to be vertically scrollable. These coupons are distributed to the member. When the member selects one coupon (touches designated coupon), the selected coupon is displayed as illustrated in FIG. 14(b). The display instrument 701 displays, on the display unit 77, the coupon information 775 related to the selected coupon and the image of the use declaration button 782.

The description returns to FIG. 11. Next, the operation determination instrument 702 determines whether or not the displayed use declaration button 782 has been operated (S76). The control unit 700 waits until the operation (No in S76). When determining that the use declaration button 782 has been operated (Yes in S76), the control unit 700 displays a dialogue screen (S77).

FIGS. 13(b) and 14(c) illustrate one example of a dialogue screen 776 displayed in the processing of S77. The control unit 700 displays, on the dialogue screen 776 of FIGS. 13(b) and 14(c), description of the fact that the coupon code 778 is displayed for a predetermined time and the coupon cannot be used after the predetermined time (e.g., two minutes) elapses. Furthermore, the control unit 700 displays an image of the confirmation button 783 for confirming the contents of the dialogue screen and starting to measure time.

The description returns to FIG. 11. Next, the operation determination instrument 702 determines whether or not the displayed confirmation button 783 has been operated (S78). The control unit 700 waits until the operation (No in S78). When determining that the confirmation button 783 has been operated (Yes in S78), the control unit 700 displays the coupon code 778 and a predetermined time (e.g., two minutes) on the display unit 77 (S79). Then, the control unit 700 activates the timer 80, and starts a countdown of the predetermined time (e.g., two minutes) (S80). The member presents the coupon code 778 displayed on the display unit 77 to a clerk who operates the POS terminal 1. The clerk reads the presented coupon code 778 with the code reader 20, and executes discount processing using the coupon.

FIGS. 13(c) and 14(d) illustrate one example of the coupon code 778 and a predetermined time 777 (e.g., two minutes) displayed by the control unit 700 in the processing of S79. Then, the control unit 700 starts a countdown from the displayed predetermined time 777, and counts down to "zero" (until expiration).

The description returns to FIG. 11. Next, the progress determination instrument 703 determines whether or not the timer 80 has measured the predetermined time and has expired (S81). The processing instrument 704 waits until the expiration (No in S81). When determining that the timer 80 has expired (Yes in S81), the processing instrument 704 performs processing of hiding the coupon code 778 processed in S79 (S82). That is, the processing instrument 704 performs processing of prohibiting use of the coupon.

FIGS. 13(d) and 14(e) illustrate one example of a screen in which the coupon code 778 is hidden in the processing of S82. As illustrated in FIGS. 13(d) and 14(e), the processing instrument 704 displays a message 779 indicating that an expiration date of a coupon has passed at a position where the coupon code 778 is hidden. Furthermore, the processing instrument 704 displays that fact that the predetermined time has been counted down to "zero" .

The description returns to FIG. 11. Next, the control unit 700 transmits coupon invalidity information indicating that the coupon has become unusable and the member ID to the electronic receipt management server 4 (S83). Then, the control unit 700 returns to S63. Note that the code symbol displayed in S62 is always displayed during the subsequent processing, or can be displayed by a simple operation.

As described above, the processing instrument 704 performs control of hiding the coupon code 778 displayed on the display unit 77 at the time point when the predetermined time elapses, so that the coupon code 778 cannot be read by the code reader 20 after the predetermined time elapses. Therefore, a coupon that has passed a predetermined time cannot be used. Note that, when determining, in S71, that the coupon button 781 has not been operated (No in S71), the control unit 700 returns to S63.

As illustrated above, the portable terminal 7 of the embodiment includes: the electronic receipt information unit 731 that stores coupon information related to a coupon; the display instrument 701 that displays an image of the coupon, which includes the coupon code 778 related to the designated coupon and the confirmation button 783 of the coupon; the operation determination instrument 702 that determines an operation of the confirmation button 783; the progress determination instrument 703 that determines whether or not a predetermined time has elapsed since it was determined that the confirmation button 783 had been operated; and the processing instrument 704 that hides the coupon code 778 related to the coupon displayed by the display instrument 701 in a case where it is determined that the predetermined time has elapsed.

Since the portable terminal 7 of the embodiment hides the coupon code 778 of a coupon that has passed a predetermined time, reuse of the coupon can be prevented by a simple configuration (only by control in portable terminal 7).

Although the embodiment of the present invention has been described above, the embodiment is presented as an example, and is not intended to limit the scope of the invention. The embodiment can be implemented in various other forms, and various omissions, substitutions, changes, and combinations can be made without departing from the gist of the invention. The embodiment and variations thereof are included in the scope and gist of the invention, and are included in the invention described in claims and the equivalent scope thereof.

For example, in the above-described embodiment, the processing instrument 704 performs processing of hiding the displayed coupon code 778 in a case where a predetermined time has elapsed. This is, however, not a limitation. For example, the processing instrument 704 may prohibit use of a coupon by making the coupon code 778 unreadable by displaying another piece of information (e.g., message 779) on the coupon code 778 displayed in a case where the predetermined time has elapses to hide the coupon code 778. In this case, in the processing of S82, the processing instrument 704 does not hide (keeps displaying) the coupon code 778, and displays the message 779 in such a size and at such a position that the coupon code 778 is made unreadable. The processing instrument 704 may prohibit reuse of the coupon in such a manner. Furthermore, for example, the processing instrument 704 may transmit the coupon invalidity information to the electronic receipt management server 4 without executing the processing of S82 when the timer 80 expires, and prohibit the use of the coupon.

Furthermore, in the embodiment, the confirmation button 783 has been described as one example of the use button. This is, however, not a limitation. For example, both the use declaration button 782 and the confirmation button 783 may be used as use buttons. In this case, the operation determination instrument 702 confirms operations of the use declaration button 782 and the confirmation button 783.

Furthermore, in the embodiment, the coupon information is added to an electronic receipt distributed to the member by using the mechanism of the electronic receipt, and displayed on the portable terminal 7. This is, however, not a limitation. The present invention may be implemented without using the mechanism of an electronic receipt. That is, the coupon according to the present invention is not required to be added to an electronic receipt. For example, the coupon may be electronically distributed by a store, a manufacturer, and the like through a homepage and a direct mail, and acquired and stored in the portable terminal 7 by a member.

Note that a program to be executed by the portable terminal 7 of the embodiment may be provided by being recorded in a computer-readable recording medium such as a CD-ROM, a flexible disk (FD), a CD-R, and a digital versatile disk (DVD) in a file in an installable or executable format.

Furthermore, the program to be executed by the portable terminal 7 of the embodiment may be provided by being stored on a computer connected to a network such as the Internet and downloaded via the network. Furthermore, the program to be executed by the portable terminal 7 of the embodiment may be provided or distributed via the network such as the Internet.

Furthermore, the program to be executed by the portable terminal 7 of the embodiment may be provided by being preliminarily incorporated in a ROM or the like.

### CITATION LIST

### Patent Literature

Patent Literature 1: JP 2021-185508 A

## Claims

1. A portable terminal device comprising:
a coupon storage unit that stores coupon information related to a coupon;
a display instrument that displays an image of a coupon, which includes a coupon code related to the coupon which has been designated and a use button of the coupon;
an operation determination instrument that determines an operation of the use button;
a progress determination instrument that determines whether or not a predetermined time has elapsed since it was determined that the use button had been operated; and
a processing instrument that prohibits use of the coupon displayed by the display instrument in a case where it is determined that the predetermined time has elapsed.

2. The portable terminal device according to claim 1,
wherein, when it is determined that a predetermined time has elapsed, the processing instrument hides the coupon code that has been displayed.

3. The portable terminal device according to claim 1,
wherein, when it is determined that a predetermined time has elapsed, the processing instrument makes the coupon code unreadable by displaying another piece of information on the coupon code that has been displayed.

4. The portable terminal device according to claim 1,
wherein, when it is determined that a predetermined time has elapsed, the processing instrument transmits prohibition information for prohibiting use of the coupon that has been displayed to a device that manages the coupon.

5. The portable terminal device according to claim 1,
wherein the coupon storage unit stores coupon information related to a coupon added to an electronic receipt.
